# EUROPÄISCHE PATENTSCHRIFT

(11) **EP 0 562 394 B1**
(45) Veröffentlichungstag und Bekanntmachung des Hinweises auf die Patenterteilung: **17.04.1996**
(21) Anmeldenummer: 93104081.0
(22) Anmeldetag: 12.03.1993
(51) Int. Cl.: C08J 9/10, C08J 9/16, C08G 18/08, C08L 75/04

(54) **Expandierbare, treibmittelhaltige Polyurethan-Pulverzubereitungen sowie ihre Verwendung zur Herstellung geschäumter Polyurethan-Formkörper**
Expandable polyurethane powder compositions containing an expanding agent and their use for the preparation of shaped foamed polyurethane bodies
Compositions de poudre de polyuréthane expansible contenant des agents d'expansion et leur utilisation pour la préparation de corps moulés de mousses de polyuréthane

(30) Priorität: 25.03.1992 DE 4209711
(43) Veröffentlichungstag der Anmeldung: 29.09.1993
(73) Patentinhaber: BAYER AG, D-51368 Leverkusen (DE)
(72) Erfinder: Werner, Joachim, Dr., W-4047 Dormagen 1 (DE); Meckel, Walter, Dr., W-4040 Neuss (DE); Wegener, Dirk, Dr., W-4019 Monheim (DE)

(56) Entgegenhaltungen:
- EP-A- 0 447 817
- EP-A- 0 539 802
- US-A- 5 047 439

## Beschreibung

Die vorliegende Erfindung betrifft expandierbare, treibmittelhaltige Polyurethan-Pulverzubereitungen sowie ihr Verwendung zur Herstellung geschäumter Polyurethan-Formkörper.

Auf vielen Gebieten der Kunststoffherstellung und -verarbeitung spielen Pulver eine wichtige Rolle. Aufgrund ihres hohen Zerteilungsgrades und des damit verbundenen Fließvermögens finden sie z.B. Verwendung zur Herstellung von Klebstoffen, Beschichtungen oder dünnen Filmen und Folien.

Bekannt und in zahlreichen Patent- und Literaturveröffentlichungen (vergl. z.B. Kunststoff-Handbuch, Band 7, "Polyurethan", 1. Auflage 1966, 2. Auflage 1983, Carl-Hanser-Verlag, München, Wien) beschrieben ist auch die Herstellung zellhaltiger (geschäumter) Formkörper aus mikrozellularen Polyurethan-Elastomeren oder Polyurethan-Schaumstoffen ("Polyurethan" wird im folgenden auch als "PU" abgekürzt). Sie werden üblicherweise hergestellt, indem flüssige Treibmittel enthaltende, gießbeziehungsweise fließfähige Reaktionsmischungen aus organischen Polyisocyanaten und Verbindungen mit mindestens zwei reaktiven Wasserstoffatomen in gegebenenfalls temperierte Formwerkzeuge eingefüllt und dort anschließend aufgeschäumt und ausgehärtet werden.

Polyurethan-Formkörper mit einer kompakten, im wesentlichen porenfreien Randzone oder Oberfläche und einem zelligen Kern (PU-Integralschaumstoffe) werden bekannterweise hergestellt, indem mehr der schaumfähigen Reaktionsmischung in das Formwerkzeug gefüllt wird, als zur vollstandigen, drucklosen Ausschäumung des Werkzeughohlraums notwendig ist, so daß die Verschäumung in einem geschlossenen Formwerkzeug unter Verdichtung durchgeführt wird.

Für zahlreiche Anwendungen, z.B. für die Schalldämpfung etwa im Motorraum von Kraftfahrzeugen, werden dünne PU-Schaumstoffplatten oder -folien verwendet, die in zahlreichen aufwendigen Einzelschritten durch Zerteilen (Schneiden oder Stanzen) von großen PU-Schaumstoffblöcken oder Verkleben von PU-Schaumstoffabfällen unter Druck hergestellt werden. Wünschenswert wäre hier, die Schaumstoffteile in möglichst wenig Arbeitsgängen direkt in der gewünschten Form herzustellen, wobei der Schäum- und Härtevorgang üblicher flüssiger Reaktivsysteme bei derartig kleinen Schaumstoffteilen aber nur schwierig zu bewerkstelligen ist.

Stand der Technik ist ferner das Hinterschäumen dekorativer Kunststoff-Folien im Kraftfahrzeug-Innenraum, wobei die Folien oder Häute vorzugsweise mit PU-Schaumstoff auf Basis einer flüsssigen Reaktionsmischung hinterschäumt werden (vergl. z.B. R. Pfriender, Kunststoffe, 76 (1986), 10, S. 960 ff.). Üblicherweise werden nach dem Thermoform-Verfahren verformte PVC/ABS-Folien verwendet, die in einem zweiten Arbeitsgang, der mit einem Wechsel des Formteile verbunden ist, hinterschäumt werden. Aus Flüssig-Systemen hergestellte PU-Folien können nach dem IMC-Verfahren (In-Mould-Coating) verarbeitet werden. Die Herstellung der Bauteile ist aber sehr aufwendig und wird noch kaum beherrscht (Dr. M. Wachsmann, Kunststoffberater, 10/1987, S. 27-28).

Die Herstellung wesentlich feiner strukturierter und hinterschnittener, also qualitativ höherwertiger Folien erlaubt demgegenüber das "powder-slush-moulding"-Verfahren. Dabei wird nach dem Stand der Technik PVC-Pulver verwendet, welches durch Schwenken im erhitzten Formwerkzeug bei etwa 250° C geliert wird. Nach dem Abkühlen der Form kann die Folie entnommen und zur Hinterschäumung eingesetzt werden. Auch hier ist also ein Wechsel der hergestellten Folie in ein anderes Formteil, also eine Hinterschäumung in einer zweiten Apparatur, notwendig.

Nachteilig an den üblicherweise mit PU-Schaumstoffen hinterschäumten PVC-Folien ist jedoch die gegenseitige negative Beeinflussung der PVC-Folie und der Hinterschäumung. Katalysatoren oder Stabilisatoren können aus dem PU-Schaum in die PVC-Deckschicht diffundieren, gleichzeitig findet eine Migration von z.B. Weichmachern in umgekehrter Richtung statt. Durch diese Prozesse können die Formkörper, z.B. durch Versprödung, mechanisch geschädigt oder verfärbt werden. Eine Vermeidung dieser schädigenden Wechselwirkung wird möglich durch Verwendung von PU-Pulver zur Erzeugung der Deckschichten und deren Hinterschäumung mit PU-Schaum mit dem zusätzlichen Vorteil, einen einheitlichen Kunststoffverbund zu erhalten, der einfacher wiederaufzuarbeiten ist. Von Vorteil ware dabei ein gegenüber dem Stand der Technik vereinfachtes Verfahren, bei dem die erzeugte Haut direkt im gleichen Formteil, in dem sie hergestellt wurde, hinterschäumt werden kann.

Beschrieben ist die Möglichkeit, thermoplastische Polyurethane (TPU), die durch Extrusions- oder Bandverfahren aus der Schmelze erhalten werden, nachträglich zu granulieren und zu mahlen und schließlich PU-Pulver zu erhalten (DE-OS 3 916 874), die durch Sintern zu Folien oder Beschichtungen verarbeitet werden können, vgl. US-A-5 047 439.

Beschrieben ist auch die Möglichkeit, die so erhaltenen TPU-Pulver im Gemisch mit einem bei 23° C festen Treibmittel durch Sintern zu zelligen PU-Formkörpern, vorzugsweise PU-Flächengebilden, zu verarbeiten. Diese treibmittelhaltigen PU-Pulvermischungen können z.B. im erwähnten powder-slush-Verfahren zum Hinterschäumen der vorher erzeugten Haut ohne Wechsel des Formteils verwendet werden (DE-OS 4 006 648).

Dieses Vorgehen, also das Verwenden von durch Extrusions- oder Bandverfahren hergestellten TPU ist zum einen wegen des zur Pulverherstellung notwendigen nachgeschalteten aufwendigen Mahlungsprozesses nachteilig. Wegen der Zähigkeit der verwendeten Materialien muß beim Mahlen stark gekühlt werden, z.B. mit flüssigem Stickstoff. Hinzu kommen aufwendige Vorrichtungen zur Staubvermeidung. Zudem kann die irreguläre Form des Mahlgutes Probleme bei der Fließfähigkeit des Pulvers hervorrufen. Die Herstellung der treibmittelhaltigen TPU-Pulvermischung muß wegen der hohen Temperaturen des Extrusions- oder Bandverfahrens durch nachträgliches Abmischen des Pulvers mit dem bei 23° C festen, ebenfalls pulverförmigen Treibmittel erfolgen, was einen zusätzlichen aufwendigen Verarbeitungsschritt bedeutet.

Bekannt ist die Möglichkeit, Isocyanate mit monofunktionellen Reaktionspartnern ("Verkappungsmittel") wie z.B. Oximen, Caprolactam oder Phenolderivaten zu thermolabilen Addukten umzusetzen und mittels dieser "verkappten Isocyanate" Systeme zu erhalten, die bis zur Spalttemperatur der Addukte thermoplastisch sind und oberhalb dieser Temperatur vernetzen.

Weiterhin ist die Verwendung von Uretdionen oder Uretdiongruppenhaltigen Polyisocyanaten in einkomponentigen PU-Reaktivsystemen an sich bekannt. Die Uretdiongruppen enthaltenden Polyisocyanate werden durch Zusammenlagerung ("Dimerisierung") zweier Iisocyanatgruppen in Gegenwart spezieller Katalysatoren erhalten. Die Uretdiongruppen spalten bei höherer Temperatur unter Rückbildung zweier Isocyanatgruppen, die z.B. in Gegenwart von OH-Gruppen unter Vernetzung weiterreagieren, auf. Dies geschieht ohne Freisetzung eines "Verkappungsmittels".

In allen Fällen werden zunächst thermoplastisch verarbeitbare Systeme erhalten, die aber bei der Verarbeitung vernetzte Strukturen mit den damit verbundenen Vorteilen (höherer Wärmestand, höhere Reißfestigkeiten) ausbilden.

Die Herstellung solcher verkappter Isocyanate enthaltenden 1K-PU-Systeme nach dem herkömmlichen Extrusions- oder Bandverfahren in der Schmelze, wie z.B. in den genannten DE-OS 3 916 874 und DE-OS 4 006 648 beschrieben, ist aber grundsätzlich problematisch, da dabei die Spalttemperatur erreicht oder überschritten werden kann und das System schon bei der Herstellung vernetzt. Außerdem muß, wie oben beschrieben, daß Produkt anschließend in kosten- und materialaufwendiger Weise zum Pulver zermahlen werden.

Demgegenüber stellt die an sich bekannte (z.B. US 4 985 490, EP 0 394 789) Direktherstellung von PU-Pulvern durch Polyaddition in durch grenzflächenaktive Copolymere stabilisierter Emulsion ein Verfahren dar, welches sofort und bei vergleichsweise moderaten Reaktionstemperaturen freifließende Pulver liefert.

Die Aufgabe der vorliegenden Erfindung bestand also darin, für Anwendungszwecke, bei denen die Herstellung zelliger PU-Formkörper mit relativ geringer Schichtdicke oder die Hinterschäumung kompakter Folien direkt im Formteil vorteilhaft ist, geeignete, vorteilhaft pulverförmige, aufschmelzbare, gegebenenfalls aber nachvernetzbare Polyurethansysteme zur Verfügung zu stellen, ohne daß ein aufwendiges Mahlen oder Nachvermischen mit Treibmitteln notwendig ist.

Diese Aufgabe konnte gelöst werden durch eine expandierbare, treibmittslhaltige Polyurethan-Pulverzubersitung, die erhalten wird durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen aufweist,
in einer inerten organischen, flüssigen Trägerphase, ind er die Komponenten IA und IB sowie das als Umsetzungsprodukt erhaltene Polyurethan-Pulver unlöslich oder mit ihr nicht mischbar sind, wobei sich kugelförmige Partikel des Pulvers bilden, die vor Agglomeration durch die oberflächenaktive Verbindung geschützt sind, und
c) Abtrennung des Pulvers von der genannten inerten organischen Trägerphase, wobei erfindungsgemäß der inerten organischen Trägerphase vor oder nach der Umsetzung ein in der Trägerphase unlösliches, bei Raumtemperatur (25° C) festes pulverförmiges Treibmittel zugegeben wird.

Die erfindungsgemäße, treibmittelhaltige Polyurethan-Pulverzubsreitung kann in vorteilhafter Weise zur Herstellung geschäumter Polyurethan-Formkörper durch Sintern bei erhöhter Temperatur mit Hilfe eines Formwerkzeugs unter Aufschmelzen des Pulvers und Expansion infolge thermischer Zersetzung des Treibmittels verwendet werden.

Dabei kann in einer bevorzugten Ausführungsform der erfindungsgemäßen treibmittelhaltigen Pulverzubereitung das Treibmittel bereits während der Herstellung des Pulvers, z.B. der Emulsion der erfindungsgemäßen Komponenten IA oder IB, zugesetzt werden, Ein nachträgliches Vermischen von Polyurethanpulver und Treibmittel mit den dabei auftretenden Problemen (Staubentwicklung) wird dadurch unnötig.

Zur Herstellung der erfindungsgemäßen treibmittelhaltigen Polyurethan-Pulverzubereitung werden bei Raumtemperatur (25° C) feste, pulverförmige Treibmittel mit einer mittleren Partikelgröße von 1 bis etwa 300 µ, vorzugsweise bis 30 µ, verwendet, die sich vorzugsweise homogen mit dem erfindungsgemäßen Polyurethan-Pulver vermischen lassen. Die Partikelgröße beeinflußt die Zersetzungstempsratur und -geschwindigkeit.

Zweckmäßigerweise weden chemische Verbindungen verwendet, die sich innerhalb eines bestimmten, möglichst engen Temperaturintervalls mit hoher Gasausbeute zersetzen. Die Zersetzungstemperatur muß dabei der Verarbeitungstemperatur und der thermischen Belastbarkeit der verwendeten erfindungsgemäßen Polyurethan-Systeme angepaßt sein. Falls das Treibmittel, wie weiter unten näher erläutert, bereits im Zuge der Herstellung der erfindungsgemäßen Polyurethan-Pulver zugesetzt wird, sollte es mit den eingesetzten Rohstoffen nicht einer die Pulverherstellung störenden Weise reagieren und sich nicht in der Trägerphase lösen. Ferner sollten die bei der thermischen Zersetzung entstehenden Zersetzungsprodukte gesundheitlich unbedenklich sein und die Thermostabilität und mechanischen Eigenschaften der erfindungsgemäßen geschäumten Polyurethan-Formkörper nicht negativ beeinflussen, ausblühen oder verfärbend wirken.

Feste Treibmittel, die diese Anforderungen zumindest teilweise erfüllen, sind beispielsweise Azoverbindungen wie Azoisobuttersäurenitril, Azodicarbonamid (auch Azobisformamid genannt) oder Barium-azodicarboxylat, substituierte Hydrazine wie z.B. Diphenylsulfon-3,3'-disulfohydrazid, 4,4'-Oxybis(benzolsulfohydrazid), Trihydrazinotriazin oder Arylbis(sulfohydrazid), Semicarbazide wie z.B. p-Toluylen-sulfonylsemicarbazid oder 4,4'-Oxybis(benzolsulfonyl-semicarbazid), Triazole wie z.B. 5-Morpholyl-1,2,3,4-thiatriazol und N-Nitrosoverbindungen wie z.B. N,N'-Dinitrosopentamethylentetramin oder N,N-Dimethyl-N,N'-dinitrosophthalamid, Benzoxacine wie z.B. Isatosäureanhydrid oder Treibmittelzusammensetzungen wie z.B. Natriumcarbonat/Zitronensäure-Gemische. Von den genannten Verbindungen haben sich besonders die Azoverbindungen und Hydrazine bewahrt. Die erfindungsgemäßen festen Treibmittel können als Einzelverbindungen oder als Mischungen eingesetzt werden. Besonders bevorzugt zur Herstellung der erfindungsgemäßen treibmittelhaltigen Polyurethan-Pulverzubereitung ist das Azodicarbonamid, welches mit verschiedenen definierten mittleren Teilchengrößen kommerziell erhältlich ist.

Als erfindungsgemäß eingesetzte Komponente IA wird bevorzugt ein NCO-Prepolymer verwendet, welches entweder separat oder in der erfindungsgemäß verwendeten organischen Trägerphase durch Reaktion einer gegenüber NCO-Gruppen reaktiven Verbindung mit einem Polyisocyanat hergestellt wird.

Als Polyisocyanate können dabei aromatische, aliphatische oder cycloaliphatische Diisocyanate oder Gemische derselben verwendet werden. Dabei ist zu beachten, daß diese Diisocyanate entweder flüssig oder bei den Reaktionstemperaturen in der Trägerphase flüssig emulgierbar sind oder zumindest das entstehende NCO-Prepolymer flüssig emulgierbar ist. Beispielhaft seien als aromatische Diisocyanate das Toluylendiisocyanat (2,4 und 2,6-Isomere oder Gemische derselben), das Diphenylmethandiisocyanat (4,4'- und 2,4'-Isomer oder Gemische derselben), das 1,4-Phenylendiisocyanat, das 1,5-Naphthylendiisocyanat (wegen des hohen Schmelzpunktes weniger bevorzugt), als aliphatische Diisocyanate das Hexamethylen-1,6-diisocyanat, das Xylylendiisocyanat, das 1,12-Dodecandiisocyanat, als cycloaliphatische Diisocyanate das 4,4'-Methylen-bis-(cyclohexyldiisocyanat), das 1,4-Cyclohexyldiisocyanat und das Isophorondiisocyanat genannt.

Aliphatische oder cycloaliphatische Diisocyanate wie das 1,6-Hexamethylendiisocyanat oder das 4,4'-Methylen-bis(cyclohexyldiisocyanat) sind bevorzugt, wenn unter Licht nicht verfärbende Produkte erforderlich sind.

Als erfindungsgemäße Komponente IIB mit freien NCO-Gruppen werden bevorzugt eines oder ein Gemisch mehrerer der genannten Polyisocyanate eingesetzt.

Als Komponente IB oder als gegenüber Isocyanat reaktive Verbindungen bei der Herstellung des NCO-Prepolymers, welches bevorzugt als erfindungsgemäße Komponente IA verwendet wird, werden bevorzugt hochmolekulare Glykole mit im Mittel zwei Hydroxygruppen und mittleren Molmassen von etwa 400 bis 6000 eingesetzt. Dabei kann es sich beispielsweise um hydroxyfunktionelle Polyester, Polycarbonate, Polyestercarbonate, Polyether, Polyethercarbonate, Polyacetale, Polyacrylate, Polybutadiene, Polyesteramide oder Polythioether handeln. Auch aminofunktionelle Polyether (vergl. US 4 724 252, DOS 3 713 858) können eingesetzt werden. Dabei sind solche Verbindungen bevorzugt, welche pro Molekül im Mittel zwei gegenüber NCO-Gruppen reaktive Gruppen aufweisen. Höherfunktionelle Verbindungen können in eingesetzt werden, doch muß dann gegebenenfalls durch Beimischung monofunktioneller Reaktanden die Thermoplastizität des PU-Pulvers gewährleistet sein.

Geeignete Polyether sind z.B. solche, welche durch Ringöffnungspolymerisation von Propylenoxid oder Ethylenoxid in Gegenwart von einer oder mehrerer Verbindungen mit aktivem Wasserstoff oder durch Ringöffnungspolymerisation von Tetrahydrofuran erhalten werden.

Wenn gegenüber Licht beständige Produkte erforderlich sind, werden bevorzugt Polyester, Polycarbonate oder Polyestercarbonate eingesetzt. Geeignete Polyesterpolyole können z.B. durch Kondenssation einer oder mehrerer Dicarbonsäuren, ihrer Anhydride oder Diester durch Umsetzung mit einem oder mehreren niedermolekularen Glykolen erhalten werden. Geeignete Dicarbonsäuren sind z.B. Bernsteinsäure, Adipinsäure, Korksäure, aromatische Dicarbonsäuren wie z.B. Phthalsäure, Isophthalsäure oder Terephhthalsäure oder die entsprechenden teil- oder perhydrierten Typen. Geeignete niedermolekulare Glykole sind z.B. Ethylenglykol, 1,2- oder 1,3-Propylenglykol, 1,4- oder 2,3-Butandiol, Neopentylglykol, 1,6-Hexandiol, 1,8-Octandiol, Cyclohexandimethanol, Diethylenglykol oder Dipropylenglykol. Polyester, die durch Polymerisation von Lactonen wie z.B. ε-Caprolacton erhalten werden, sind ebenfalls geeignet. Geeignete aliphatische hydroxyfunktionelle Polycarbonate können z.B. durch Reaktion der oben genannten niedermolekularen Glykole mit Diarylcarbonaten oder cyclischen Carbonaten wie Propylencarbonat erhalten werden.

Die oben genannten hochmolekularen Glykole oder Aminopolyether sind geeignet als erfindungsgemäße Komponenten IB und IIA. Vorteilhaft werden aber als Komponente IIA gegenüber NCO-Gruppen reaktive Verbindungen eingesetzt, welche Molmassen von weniger als 400 aufweisen. Geeignet sind z.B. die im Zusammenhang mit den aliphatischen Polyestern genannten niedermolekularen Glykole. Weiterhin geeignet sind Aminoalkohole wie z.B. N-Methyl-diethanolamin oder Aminosthanol und Diamine wie z.B. Ethylendiamin, 1,6-Diaminohexan oder Piperaine, Hydrazine, Hydrazide und Semicarbazide sind ebenfalls geeignet. Geeignet als Komponenten IB oder IIA sind auch Gemische der genannten hoch- und niedermolekularen Diole. Bevorzugt bei der Herstellung der erfindungsgemäßen PU-Pulver sind als Komponente IIA die niedermolekularen Glykole.

Darüberhinaus ist es erfindungsgemäß in einer weiteren Ausführungsform möglich, die treibmittelhaltige Pulverzubereitung unter Einsatz einer Komponente III herzustellen, wobei die Komponente III während des Aufschmelzens des Pulvers eine Nachvernetzung bewirkt.

Die erfindungsgemäß, gegebenenfalls zusätzlich verwendete Komponente III stellt ein Umsetzungsprodukt dar, welches separat hergestellt und mit einer der erfindungsgemäßen Komponenten IA oder IIB, oder, falls es keine freien NCO-Gruppen mehr aufweist, auch mit IB oder IIA, bevorzugt aber IA, vermischt oder coemulgiert wird.

Bei der erfindungsgemäß verwendeten Komponente III, die anteilig blockierte NCO-Gruppen aufweist, kann es sich um ein unter den Herstellbedingungen des erfindungsgemäßen PU-Pulvers gegenüber mit NCO-Gruppen reagierenden Gruppen inertes, also nach außen NCO-freies Umsetzungsprodukt mit anteilig blockierten NCO-Gruppen handeln, oder es kann sich um ein gegenüber NCO-reaktiven Gruppen reaktives, also freie NCO-Gruppen enthaltendes Umsetzungsprodukt mit anteilig blockierten NCO-Gruppen handeln, welches im Mittel höchstens zwei reaktive NCO-Gruppen aufweist, so daß es ohne Vorvernetzung in das Pulver eingebaut werden kann. Schließlich kann die erfindungsgemäß verwendete Komponente III auch ein Gemisch zweier solcher Umsetzungsprodukte darstellen.

Die Komponente III kann z.B. erhalten werden, indem man ein Polyisocyanat anteilig oder vollständig mit einem Blockierungsmittel oder mit einem Blockierungsmittel und einer weiteren NCO-reaktiven Verbindung, z.B. einem Polyol, umsetzt, Dabei ist zu beachten, daß das erhaltene Umsetzungsprodukt mit der erfindungsgemäß verwendeten Komponente IA oder IB entweder homogen mischbar oder coemulgierbar sein muß. Vorteilhaft sollte es flüssig oder bei den erfindungsgemäß angewendeten Temperaturen schmelzbar sein.

Geeignete Polyisocyanate zur Umsetzung mit einem Blockierungsmittel und gegebenenfalls einer weiteren gegenüber NCO-Gruppen reaktiven Verbindung sind z.B. die weiter oben aufgeführten Diisocyanate. Vorteilhaft werden aber auch Polyisocyanate mit höherer Funktionalität verwendet, so z.B. die in der Lack- und Coatingindustrie bekannten vernetzenden Isocyanate wie Polymere des Diphenylmethan-diisocyanats, Biurete, Trimethylolpropanaddukte oder Trimere (Isocyanurate) der oben genannten Diisocyanate.

Zur Einstellung eines bestimmten Schmelzverhaltens und zur Erhöhung der Verträglichkeit mit den Komponenten IA oder IB kann zur Herstellung der Komponente III eine weitere gegenüber NCO-Gruppen reaktive Verbindung mit dem teilweise blockierten Polyisocyanat zur Reaktion gebracht werden. Dabei werden bevorzugt die weiter oben genannten hochmolekularen Glykole verwendet. Das Verhältnis von Glykol zu Blockierungsmittel ist, wenn ein höherfunktionelles Isocyanat eingesetzt wird, so zu wählen, daß eine vorzeitige Vergelung ("Verquallung") der Komponente III nicht erfolgt, d.h. daß der Gelpunkt nicht erreicht wird.

Bei den verwendeten Blockierungsmitteln kann es sich z.B. um ein Oxim (bevorzugt Butanonoxim), ein Lactam (bevorzugt ε-Caprolactam), einen Acetessigester (bevorzugt Ethyl-acetylacetat) einen Malonester (bevorzugt Diethylmalonat) oder um ein substituiertes Phenol handeln. Aus der letzteren Gruppe sind p-Hydroxybenzoesäureester (z.B. p-Hydroxybenzoesäureethylester) besonders bevorzugt. Sie weisen niedrige Abspalttemperaturen (noch unterhalb 150° C) auf, der abgespaltene Ester besitzt eine geringe Flüchtigkeit und ist nicht geruchsbelästigend.

So kann die Komponente III in einer bevorzugten Ausführungsform der vorliegenden Erfindung erhalten werden, indem das Trimer (Isocyanurat) des 1,6-Hexamethylendimit einem hydroxyfunktionellen Polyester, besonders bevorzugt ein Polyadipat mit einem Schmelzbereich nicht höher als 100° C, umgesetzt wird.

In einer weiteren Ausführungsform der vorliegenden Erfindung können als blockierte Polyisocyanate auch 1,3-Bis-(isocyanat-organo)-2,4-dioxo-1,3-diazetidine oder 3,5-Bis-(isocyanat-organo)-2,4,6-trioxo-tetrahydro-1,3,5-oxadiazine, wie z.B. das Addukt von zwei Mol 1,6-Hexamethylendiisocyanat und 1 Mol Kohlendioxid, singesetzt werden.

In einer weiteren bevorzugten Ausführungsform der vorliegenden Erfindung können als Bestandteil der Komponente III weitere Polyisocyanataddukte verwendet werden, die bei Erhitzen wieder NCO-Funktionalität generieren, ohne daß ein "Abspalter" frei wird. Hier seien bevorzugt die weiter oben erwähnten sogenannten Isocyanatdimeren oder Uretdione genannt. Als Beispiele seien hier aufgeführt die Dimeren des Toluylendiisocyanats, des Diphenylmethan-diisocyanats, des Isophorondiisocyanats sowie des 1,6-Hexamethylendiisocyanats sowie gemischte Dimere der genannten Isocyanate.

Diese Uretdion-Gruppen enthaltenden Isocyanate können als solche oder im Gemisch mit anderen Polyisocyanaten als Komponente III eingesetzt werden, Sie können, z.B. zur Verringerung der Funktionalität bei im Mittel mehr als zwei freien NCO-Gruppen im Molekül, als solche oder im Gemisch mit anderen Polyisocyanaten mit gegenüber NCO-Gruppen reaktiven monofunktionellen Verbindungen, wie z.B. Alkoholen, umgesetzt und dann als Komponente III mit noch freien NCO-Gruppen eingesetzt werden, Sie können als solche oder im Gemisch mit anderen Polyisocyanaten mit einem Gemisch aus einem hochmolekularen Glykol und, zur Einstellung der Funktionalität, einer monofunktionellen, gegenüber NCO-Gruppen reaktiven Verbindung umgesetzt werden, Sie können auch allein oder im Gemisch mit anderen Polyisocyanaten zur Herstellung der Komponente III unter Verwendung von Blockierungsmitteln, wie weiter oben beschrieben, verwendet werden.

Wenn unter Lichteinfluß nicht verfärbende Produkte erwünscht sind, sind die Uretdione der aliphatischen und cycloaliphatischen Diisocyanate bevorzugt. So wird in einer bevorzugten Ausführungsform der vorliegenden Erfindung das Dimere des 1,6-Hexamethylendiisocyanates, welches noch geringe Mengen an Trimeren (Isocyanurat) enthält, zur Einstellung der Funktionalität mit einem monofunktionellen Alkohol, bevorzugt n-Butanol, n-Octanol oder n-Dodecanol umgesetzt, so daß im Mittel ungefähr zwei NCO-Gruppen pro Molekül übrigbleiben. Die Produkte mit Butanol und Octanol sind bei Raumtemperatur vorteilhaft flüssig und werden bevorzugt als Komponente III verwendet.

Die unter Verwendung eines externen Blockierungsmittels wie z,B, p-Hydroxybenzoesäureester erhaltenen Komponenten III ermöglichen die Herstellung freifließender, thermoplastisch verarbeitbarer und dabei schnell nachvernetzender Pulver.

Die Verwendung der Uretdiongruppen enthaltenden Polyisocyanate ohne weitere Verwendung eines Blockierungsmittels erlaubt die Herstellung abspalterfreien, thermoplastisch verarbeitbarer und dabei nachvernetzender Polyurethan-Pulver.

In jedem Fall erlaubt die erfindungsgemäße Verwendung der Komponente III je nach gewünschtem Werteniveau in vorteilhafter Weise die Herstellung mehr oder weniger vernetzter, geschäumter Polyurethan-Formkörper.

Der Anteil der Komponente III in der Pulvermischung wird limitiert einerseits durch die Forderung einer hinreichend effektiven Vernetzung, die für das gewünschte Werteniveau der geschäumen Formkörper vorgegeben ist, andererseits durch die Gefahr einer Übervernetzung, die sich dadurch äußert, daß das Pulver nicht mehr gut aufschmilzt. Bevorzugt wird die Komponente III in einer solchen Menge eingesetzt, daß der Anteil der durch Deblockierung oder Spaltung rechnerisch maximal entstehenden NCO-Gruppen zur Gesamtzahl der freien oder blockierten NCO-Gruppen bei etwa 1 bis 20 %, vorzugsweise mindestens 3 %, liegt.

Die Gesamtzahl der NCO-Gruppen (blockiert und unblokkiert) sollte im erfindungsgemäßen PU-Pulver etwa gleich der Gesamtzahl der gegenüber NCO-Gruppen reaktiven Gruppen unter Ausschluß der gegebenenfalls durch den Abspalter gestellten gegenüber NCO-Gruppen reaktiven Gruppen sein. Die bei der Verarbeitung des Pulvers freiwerdenden NCO-Gruppen reagieren idealerweise mit dem Teil der gegenüber NCO-Gruppen reaktiven Gruppen ab, der durch Zugabe der erfindungsgemäßen Komponenten IB oder IIA nach Reaktion mit der Komponente IA oder IIB übrig bleibt. Dementsprechend ist der Anteil an den Komponenten IB oder IIA in etwa so zu wählen, daß nach Reaktion mit den freien NCO-Gruppen der Komponenten IA, IIB oder III ein Überschuß an gegenüber NCO-Gruppen reaktiven Gruppen verbleibt, der der Zahl an blockierten NCO-Gruppen der Komponente III in etwa entspricht. Durch geringen Über- oder Unterschuß an blockierten NCO-Gruppen läßt sich das Schmelzverhalten der erfindungsgemäßen Pulver und auch die Nachvernetzung beeinflussen, so das es von Vorteil sein kann, einen solchen Über- oder Unterschuß gezielt anzusteuern. Bevorzugt werden die einzelnen Komponenten bei der Herstellung der erfindungsgemäßen Pulver so abgestimmt, daß das Pulver thermoplastisch verarbeitbar bleibt und vorzugsweise in einem Bereich von 150 bis 220° C schmilzt.

Als flüssige, organische Trägerphase des erfindungsgemäßen Verfahrens eignen sich alle Flüssigkeiten, die mit den Reaktionsteilnehmern, z.B. mit NCO- oder aktiven Wasserstoff enthaltenden Gruppen, nicht reaktiv sind und in denen wenigstens das Gemisch der ersten und der zweiten erfindungsgemäßen Komponente und das erfindungsgemäße PU-Pulver nicht mischbar und unlöslich sind. Bevorzugt sind solche Flüssigkeiten, die nicht zum Quellen des erfindungsgemäßen PU-Pulvers führen. Wünschenswert ist auch, daß die Flüssigkeit hinreichend flüchtig ist, so daß Reste leicht vom Pulver abgetrennt werden können, daß andererseits aber der Siedepunkt oberhalb der Reaktionstemperatur liegt. Flüssigkeiten mit niedrigerem Siedepunkt können ebenfalls verwendet werden. Dies kann aber die Verwendng von Druckbehältern zur Erreichung der gewünschten Reaktionstemperatur erforderlich machen. Flüssigkeiten, die aufgrund des Siedepunktes oder aus anderen Gründen schwierig vom Produkt zu entfernen sind, können durch Waschen oder Extraktion mit anderen, leichter flüchtigen und das Produkt nicht schädigenden Flüssigkeiten entfernt werden. Der geeignete Siedebereich der Flüssigkeiten wird nach oben limitiert durch die Zersetzungstemperatur des Treibmittels, falls dieses bereits vor oder während der Umsetzung zugesetzt wird, sowie gegebenenfalls die Rückspaltungstendenz der blockierten Isocyanatgruppen im erfindungsgemäßen PU-Pulver. Somit sind für die Herstellung der erfindungsgemäßen PU-Pulver solche organischen Flüssigkeiten geeignet, welche Siedepunkte oder Siedebereiche zwischen etwa 40 und 200° C aufweisen wie z.B. Kohlenwasserstoffe, halogenierte Kohlenwasserstoffe und Ether. Flüssige Kohlenwasserstoffe, bevorzugt aliphatische Kohlenwasserstoffe, z.B. Erdölfraktionen sind aufgrund ihrer niedrigen Kosten, ihrer Indifferenz gegenüber den Reaktionsteilnehmern und der Leichtigkeit und Vollständigkeit der Entfernung vom Reaktionspunkt besonders zweckmäßig.

Die inerte organische Trägerphase wird, bezogen auf die Gesamtmasse des Ansatzes, in einem Anteil von vorzugsweise 20 bis 90 %, besondere bevorzugt 40 bis 80 %, eingesetzt.

Als oberflächenaktive Verbindungen für das erfindungsgemäße Verfahren werden vorzugsweise nichtionogene polymere Materialien mit einem Molekulargewicht über 1000 verwendet, die nichtpolare (z.B. Kohlenwasserstoffreste) und hochpolare Gruppen (z.B. Amid-, Ester- oder Carbonylgruppen) enthalten, Geeignet sind z.B. die in der Le A 27 119 beschriebenen Urethan-Acrylat-Copolymere. Bevorzugt werden die Copolymerisate von N-Vinyl-2-Pyrrolidon (NVP) mit einem ε-Olefin mit 4 bis 20 C-Atomen, die Alkylseitenketten von 2 bis 18 C-Atomen enthalten und in denen der Anteil des alkylierten Olefins im Bereich von etwa 10 bis 80 % bei einem Molekulargewicht von mehr als 1000, vorzugsweise über 4000 liegt. Im allgemeinen werden etwa 0,5 bis 10 % der oberflächenaktiven Verbindung, bezogen auf das Gesamtgewicht der Reaktionsteilnehmer, verwendet.

Zur Herstellung der erfindungsgemäßen Pulver können Katalysatoren, z.B. die in der PU-Chemie allgemein bekannten Katalysatoren, die die Reaktion von Isocyanatgruppen mit aktiven Wasserstoff enthaltenden Verbindungen beschleunigen, eingesetzt werden, Die Katalysatoren können, wenn zur Herstellung der Komponente III eine Umsetzung mit dem verwendeten Isocyanat notwendig ist, bei dieser Umsetzung eingesetzt werden, Falls die separate Herstellung der erfindungsgemäßen Komponente IA notwendig ist, können sie auch bei dieser Herstellung eingesetzt werden, Sie können ebenfalls bei der Umsetzung der Emulsion des Gemisches aus den Komponenten IA oder IB mit den Komponenten IIA oder IIB in Gegenwart der Komponente III eingesetzt werden, wobei solche Katalysatoren bevorzugt sind, die sich in der organischen Trägerphase gut lösen.

Geeignete Katalysatoren sind z.B. tertiäre Amine wie z.B. Triethylendiamin, Quecksilber-, Blei- und Wismutkatalysatoren. Bevorzugt sind Zinnkatalysatoren wie Zinnoctoat und Dibutylzinndilaurat oder Alkylester von Diorganozinndimercaptocarbonsäuren. Sie werden in Mengen bis zu 10 %, bezogen auf die Gesamtmasse der Reaktionsteilnshmer, eingesetzt.

Im Zuge der Herstellung der treibmittelhaltigen Polyurethan-Pulverzubereitung wird das erfindungsgemäße feste, pulverförmige Treibmittel bei Temperaturen von üblicherweise unter 80° C vorteilhaft unter Vermeidung von Staubentwicklungen bei einem solchen Mischvorgang noch vor der Abtrennung der organischen Trägerphase zugesetzt.

Zur Herstellung der erfindungsgemäßen treibmittelhaltigen Polyurethan-Pulverzubereitung kann beispielsweise eine erfindungsgemäße Komponente IB in Form eines Gemisches aus hoch- und niedermolekularem Glykol (OH-Komponente), gegebenenfalls unter Zusatz der Komponente III (in einer Ausführungsform ohne freie NCO-Gruppen), in der erfindungsgemäßen flüssigen Trägerphase mittels der oberflächenaktiven Verbindung emulgiert werden. Dabei ist durch die Reaktionsführung (Temperatur, Katalysatorzugabe) zu gewährleisten, daß keine vorzeitige Reaktion der verkappten beziehungsweise blockierten NCO-Gruppen der gegebenenfalls zugesetzten Komponente III mit der Komponente IB erfolgt. Anschließend erfolgt unter Zusatz der Komponente IIB, beispielsweise ein aliphatisches Diisocyanat, die Umsetzung zum erfindungsgemäßen PU-Pulver. Alternativ können die Komponenten IIB und gegebenenfalls III (letztere mit oder ohne freie NCO-Gruppen) nacheinander oder im Gemisch der emulgierten Komponente IB zugesetzt werden. Nach Abschluß der Reaktion kann dann vor Abtrennung des Pulvers von der Trägerphase das feste, pulverförmige Treibmittel z.B. durch intensives Rühren mit der entstandenen Suspension vermischt und die erhaltene treibmittelhaltige Polyurethan-Pulverzubereitung von der Trägerphase abgetrennt werden.

In einer bevorzugten Ausführungsform der Erfindung wird zur Herstellung der erfindungsgemäßen treibmittelhaltigen Polyurethan-Pulverzubereitung das feste, pulverförmige Treibmittel bereits den Komponenten IA oder IB oder ihren Vorstufen zugesetzt und mit ihnen coemulgiert. Auf diese Weise wird erreicht, daß das Treibmittel in den Tröpfchen der Emulsion und später in den festen Partikeln der erfindungsgemäßen treibmittelhaltige Polyurethan-Pulverzubsreitung inkorporiert wird. Dies ist von offensichtlichem Vorteil, da eins Staubentwicklung durch das zugesetzte Treibmittel bei der Aufarbeitung der erfindungsgemäßen treibmittelhaltigen Polyurethan-Pulverzubereitung auf diese Weise weitgehend vermieden wird.

So kann beispielsweise als Komponente IA ein NCO-Prepolymer als Schmelze bei einer Temperatur deutlich unterhalb der Zersetzungstemperatur des erfindungsgemäßen Treibmittels separat hergestellt und dabei das feste Treibmittel bereits zugesetzt werden. Die treibmittelhaltige Schmelze wird dann mit Hilfe einer oberflächenaktiven Verbindung in der inerten organischen Trägerphase emulgiert. Alternativ kann in die Vorstufen zur Herstellung dieses Prepolymers, also beispielsweise ein aliphatischer hydroxyfunktioneller Polyester und ein aliphatisches Isocyanat, das Treibmittel eingearbeitet und die Vorstufen in der inerten organischen Trägerphase unter Bildung einer Emulsion der Komponente IA zur Reaktion gebracht werden, Die gegebenenfalls verwendete separat hergestellte Komponente III, enthaltend blockierte NCO-Gruppen, wird entweder bevorzugt mit der Schmelze der separat hergestellten Komponente IA vermischt und die Mischung in der Trägerphase emulgiert, oder die Komponente III (als Schmelze oder Flüssigkeit) wird der Emulsion der Komponente IA in der inerten organischen Trägerphase zugesetzt. Die erforderliche Menge der Komponente IIA wird zugesetzt, woraufhin man die Reaktion, bei der sich eine Suspension der erfindungsgemäßen treibmittelhaltigen Polyurethan-Pulverzubereitung bildet, im wesentlichen bis zur Vollendung ablaufen läßt. Die Reaktionszeit kann durch Katalysatormenge und Temperatur eingestellt werden, wobei die Temperatur durch die Zersetzungstemperatur des Treibmittels und Spalttemperatur der gegebenenfalls eingesetzten blockierten Isocyanate nach oben limitiert ist. Die Abtrennung der treibmittelhaltigen Polyurethan-Pulverzubereitung von der Trägerphase kann z.B. durch Filtration mit anschließender Trocknung unterhalb der Entblockierungstemperatur der gegebenenfalls eingesetzten blockierten Isocyanate, der Zersetzungstemperatur des Treibmittels und unterhalb des Schmelzpunktes des Pulvers erfolgen.

Die Trägerphase kann nach Abtrennung vom erfindungsgemäßen Pulver vorteilhaft wiederverwendet werden, wenn die bevorzugten, in der Trägerphase gut löslichen Katalysatoren und Emulgatoren wie die oben genannten NVP-Olefin-Copolymere verwendet werden. Diese bleiben nach Waschen des Pulvers mit dem in der Trägerphase verwendeten Lösemittel praktisch vollständig im Filtrat zurück.

Das erfindungsgemäße Pulver wird in Form kugelförmiger Teilchen mit Durchmesser zwischen etwa 10 bis 500 µ erhalten. Art und Menge des oberflächenaktiven Mittels sowie die Intensität des Rührens sowie die Temperatur während der Reaktion beeinflussen die Größenverteilung. Das erfindungsgemäße Treibmittel sollte, wenn es wie beschrieben in die Pulverpartikel inkorporiert werden soll, eine mittlere Teilchengröße deutlich unterhalb der des Pulvers aufweisen.

Die zur Herstellung der erfindungsgemäßen Polyurethan-Pulverzubereitung erforderlich Treibmittelmenge hängt u.a. ab von der herzustellenden Formkörpergeometrie, - dichte und dicke sowie der Gasausbeute des Treibmittels. Bevorzugt werden 0,1 bis 10, besonders bevorzugt 0,5 bis 5 Gew.-Teile mindestens eines zumindest bei Raumtemperatur (25° C) festen, pulverförmigen Treibmittels verwendet.

Zusatzstoffe, z.B. feinteilige Feststoffe wie etwa Talke oder Dampfphasenkieselsäure zur Verbesserung der Fließeigenschaften des Pulvers oder der Schmelze, können entweder während irgendeiner Stufe vor der Filtration zugegeben oder auch nachträglich dem erfindungsgemäßen Pulver zugemischt werden. Dies gilt auch für weitere Zusatzstoffe wie z.B. organische Farbstoffe (wie Ultramarine oder Phthalocyanine) oder anorganische Pigmente, Titanoxid oder Ruß, Antioxidantien, UV-Stabilisatoren, Fließhilfsmittel usw.. In einer bevorzugten Ausführungsform der vorliegenden Erfindung werden die Zusatzstoffe einer der flüssig oder als Schmelze vorliegenden Ausgangsstoffe, vorzugsweise den Komponenten IA oder IB oder einer ihrer Ausgangsstoffe, zugesetzt.

Die erfindungsgemäße treibmittelhaltige Polyurethan-Pulverzubereitung kann verwendet werden, um geschäumte (zellhaltige) Polyurethan-Formkörper herzustellen. Dazu wird sie oberhalb der Zersetzungstemperatur des Treibmittels unter Aufschmelzen erhitzt. Dabei kann man z.B. wie in DE-OS 4 006 648 beschrieben vorgehen. Man kann z.B. die erfindungsgemäße treibmittelhaltige Polyurethan-Pulverzubereitung in einer hinsichtlich der gewünschten Dicke des zellhaltigen Formkörpers ausreichenden Menge auf die Oberfläche eines auf 150 bis 280° C, vorzugsweise 150 bis 220° C temperierten Formwerkzeugs aufbringen und nach kurzem Kontakt, z.B. nach 10 bis 30 Sekunden, die überschüssige erfindungsgemäße treibmittelhaltige Polyurethan-Zubereitung wieder abtrennen. Das Sintern unter Aufschäumen der an der Formwerkzeugoberfläche anhaftenden Pulver-Schicht erfolgt dann mittels der Wärmekapazität des Formwerkzeugs oder durch erneute Erwärmung. Nach 0,5 bis 10 Minuten läßt man das Formwerkzeug abkühlen (z.B. Luftstrom oder Wasserbad) und entformt den gebildeten geschäumten Polyurethan-Formkörper.

Man kann die erfindungsgemäße treibmittelhaltige Polyurethan-Pulverzubereitung auch in einem verschließbaren, temperierten Formwerkzeug mit Hohlraum zu geschäumten Polyurethan-Formkörpern verarbeiten, indem z.B. eine für das Ausschäumen des Formwerkzeugs ausreichende Menge der erfindungsgemäßen treibmittelhaltigen Polyurethan-Pulverzubereitung in den Hohlraum des offenen, auf 150 bis 280, vorzugsweise 150 bis 220° C temperierten Formwerkzeugs eingebracht, das Formwerkzeug verschlossen und unter weiterr Erwärmung für 0,5 bis 30, vorzugsweise 0,5 bis 15 Minuten unter Schmelzen und Schäumen der erfindungsgemäßen treibmittelhaltigen Polyurethan-Pulverzubereitung ausgeschäumt wird, wobei Vorsorge zu treffen ist, daß Gase und überschüssige Schaummengen entweichen können. Nach Abkühlen des Formwerkzeuges (s.o.) entformt man den gebildeten geschäumten Polyurethan-Formkörper.

Die in DE-OS 4 006 648 beschriebenen Möglichkeiten zur Erzielung spezieller Effekte (Oberflächenstruktur, Beschichtungen etc.) können auf die erfindungsgemäßen treibmittelhaltigen Polyurethan-Pulverzubereitungen und die mit ihnen hergestellten Formkörper angewendet werden.

Die mit der erfindungsgemäßen treibmittelhaltigen Polyurethan-Pulverzubereitung hergestellten geschäumten Formkörper stellen vorzugsweise Flächengebilde mit Dicken bis 5 cm dar und weisen eine Gesamtdichte von etwa 0,1 bis 1 g/cm³, vorzugsweise 0,15 bis 0,5 g/cm³ auf. Durch Füllstoffe kann die Dichte noch weiter erhöht werden. Durch richtige Auswahl der verwendeten Polyurethan Rohstoffe können sie sprödhart bis zähhart oder weich bis elastisch-weich eingestellt werden. Besonders vorteilhaft erweist sich die Möglichkeit der Verwendung der Komponente III zur Modifizierung der mechanischen Eigenschaften wie Reißfestigkeit, Elastizität oder Dichte. Durch Einarbeiten von verstärken wirkenden Füllstoffe wie z.B. Glasfasern in die erfindungsgemäße treibmittelhaltige Polyurethan-Pulverzubereitung kann das Eigenschaftsbild weiter verändert werden.

Die mit der erfindungsgemäßen treibmittelhaltigen Polyurethan-Pulverzubereitung hergestellten geschäumten Formkörper können im Motor- und Innenraum von Kraftfahrzeugen, z.B. als Schallisolation im Motorraum, für Säulen- oder Türverkleidungen, Dachhimmel, Armlehnen oder Instrumententafeln verwendet werden. Ebenfalls geeignet sind sie z.B. für die Herstellung von Möbeln wie z.B. Polstermöbel, Kunstleder, Innenschuhe oder Taschen. Sie können auch bei der Herstellung von Schuhsohlen als Deck- oder Zwischenschicht oder Einlageteil verwendet werden.

In den nachfolgenden Beispielen kommen die folgenden Stoffe zum Einsatz:
- Polyester I =: Polyesterpolyol auf Basis Adipinsäure, Hexandiol mit einer mittleren OH-Zahl von 48.
- Polyester II =: Polyesterpolyol auf Basis Adipinsäure, Hexandiol, Neopentylglykol mit einer mittleren OH-Zahl von 56.
- pigmentierter Polyester II =: Polyester II, in den über einer beheizte (90° C) Mühle mit stationärer Korundscheibe und Rotor, kommerziell erhältlich bei Fryma Maschinen AG, Rheinfelden), ein Gemisch von 97 Teilen Titandioxidpulver und 3 Teilen Farbruß (25 Tle. Pigment auf 100 Tle. Gemisch) eingearbeitet wurde (OH-Zahl 42).
- Polyether =: Polypropylenglykol mit der OH-Zahl 112.
- Antaron =: Antaron® V 220, ein kommerziell erhältlicher Emulgator (GAF); Copolymer aus 20 Gew.-% N-Vinyl-Pyrrolidon und 80 Gew.-% Eicosen-1.
- Stabaxol =: Stabaxol® I, ein kommerziell erhältliches (Bayer AG) Carbodiimid (Hydrolyseschutzmittel)
- BHT =: Kommerziell erhältlicher Stabilisator (butyliertes Hydroxytoluol)
- IPPD =: Kommerziell erhältlicher Stabilisator (Isopropyl-phenyl-phenylendiamin)
- Treibmittel =: Kommerziell erhältliches (Bayer AG) Azodicarbonamid mit einer mittleren Teilchengröße von 5 µm und einem Zersetsungspunkt von ca. 200° C.

### Beispiel 1 (erfindungsgemäße treibmittelhaltige Polyurethan-Pulverzubereitung auf Basis Polyester/aliphatisches Isocyanat, nachvernetzend mit Abspalter; Einrühren des Treibmittels vor der Filtration

a) Herstellung der Abspalterkomponente (Vernetzer) = Komponente III
   800 Teile eines Isocyanurats des 1,6-Hexamethylendiisocyanats (HDI-Trimerisat; %NCO = 21,5) werden bei 100° C mit 543,9 Teilen p-Hydroxybenzoesäureethylester umgesetzt. Nach ca. 1 h werden 859 Teile Ester I (s.o.) zugesetzt und die Mischung umgesetzt, bis kein freies Isocyanat mehr nachweisbar ist. Das erhaltene Produkt erstarrt unterhalb 50° C und kann portionsweise weiter eingesetzt werden.
b) Herstellung des Pulvers
   68,7 Teile Polyester I werden auf 100° C erhitzt, gemischt und unter Vakuum entwässert und entgast. Es werden 0,2 Teile Stabaxol und 0,5 Teile BHT zugesetzt. Das Gemisch wird bei 80° C mit 19,1 Teilen 1,6-Hexamethylendiisocyanat umgesetzt, bis der NCO-Wert konstant ist (berechnet 8 % NCO). Dann werden 3,6 Teile der unter a) beschriebenen Vernetzerkomponente zugesetzt.

Eine Lösung von 5 Teilen Antaron und 2 Teilen Dibutylzinndilaurat in 233 Teilen Isooctan wird auf 90° C erwärmt. Über eine Zeitspanne von ca. 10 Minuten wird das Polyester-HDI-Prepolymer (92,1 Teile) unter starkem Rühren eingetragen. Dabei wird mit einem Doppel-Propeller-Rührer bei 1.100 Upm gerührt. Nach 30 Minuten werden 7,7 Teile 1,4-Butandiol zugesetzt. Die Dispersion wird für etwa 2 Stunden bei 90° C weitergerührt, bis kein freies Isocyanat mehr nachweisbar ist. Die Heizung wird entfernt und die entstandene sedimentierende Suspension nach Abkühlen auf Raumtemperatur unter Rühren mit 3 Teilen Treibmittel versetzt. Das treibmittelhaltige Gemisch wird anschließend durch einen Büchnertrichter filtriert. Der Filterrückstand wird zweimal mit 100 Teilen Isooctan gewaschen und anschließend für 48 Stunden im Vakuum bei Raumtemperatur getrocknet, wobei ein freifließendes Pulver mit einem Schmelzpunkt von ca. 170° C erhalten wird. Mehr als 99 Gew.-% der Partikel weisen Teilchengrößen von < 315 µm auf.

Zur Herstellung eines geschäumten Flächengebildes wird eine ausreichende Menge der treibmittelhaltigen Polyurethan-Pulverzubereitung (Schichtdicke ca. 3,5 mm) auf eine Metallplatte aufgerakelt und diese für 15 Minuten bei 200° C im Ofen getempert. Dabei schmilzt das Pulvergemisch zunächst auf und beginnt dann unter Zersetzung des Treibmittels aufzuschäumen. Nach Abkühlen und Entformen erhält man eine mittelharte, elastische, geschäumte Platte, die eine Dicke von 10 mm und eine Dichte von 0,16 g/cm³ aufweist.

### Beispiel 2 erfindungsgemäße treibmittelhaltige Polyurethan-Pulverzubereitung auf Basis Polyether/aromatisches Isocyanat; Einrühren des Treibmittels vor der Filtration

8,4 Teile Polyether werden auf 100° C erhitzt, gemischt und unter Vakuum entwässert und entgast. Es werden 0,08 Teile IPPD zugesetzt. Das Gemisch wird bei 90° C mit 5,4 Teilen 4,4'-Diphenylmethan-diisocyanat umgesetzt, bis der NCO-Wert konstant ist (berechnet 8 % NCO).

Eine Lösung von 0,45 Teilen Antaron und 0,3 Teilen Dibutylzinndilaurat in 35 Teilen Isooctan wird auf 90° C erwärmt. Über eine Zeitspanne von ca. 10 Minuten wird das Polyether-Isocyanat-Prepolymer (13,8 Gew.-Teile) unter starkem Rühren eingetragen. Dabei wird mit einem Doppel-Propeller-Rührer bei 1.100 Upm gerührt. Nach 30 Minuten werden 1,2 Teile 1,4-Butandiol zugesetzt. Die Dispersion wird für etwa 1 Stunde bei 90° C weitergerührt, bis kein freies Isocyanat mehr nachweisbar ist. Die Heizung wird entfernt und die entstandene sedimentierende Suspension nach Abkühlen auf Raumtemperatur unter Rühren mit 0,45 Teilen Treibmittel versetzt. Das treibmittelhaltige Gemisch wird anschließend durch einen Büchnertrichter filtriert. Der Filterrückstand wird zweimal mit 15 Teilen Isooctan gewaschen und anschließend für 48 Stunden im Vakuum bei Raumtemperatur getrocknet, wobei ein freifließendes Pulver mit einem Schmelzpunkt von ca. 180° C erhalten wird. Mehr als 99 Gew.-% der Partikel weisen Teilchengrößen von < 315 µm auf.

Zur Herstellung eines geschäumten Flächengebildes wird eine ausreichende Menge der treibmittelhaltigen Polyurethan-Pulverzubereitung (Schichtdicke ca. 4 mm) auf eine Metallplatte aufgerakelt und diese für 15 Minuten bei 200° C im Ofen getempert. Dabei schmilzt das Pulvergemisch zunächst auf und beginnt dann unter Zersetzung des Treibmittels aufzuschäumen. Nach Abkühlen und Entformen erhält man eine sehr weiche, wenig elastische geschäumte Platte, die eine Dicke von 8 mm und eine Dichte von 0,2 g/cm³ aufweist.

### Beispiel 3 erfindungsgemäße treibmittelhaltige Polyurethan-Pulverzubereitung, grau pigmentiert, auf Basis Polyester/aliphatisches Isocyanat; nachvernetzend ohne Abspalter; Einbau des Treibmittels in die Pulverteilchen

a) Herstellung der Vernetzerkomponente = Komponente III
   491 Teile eines durch Dimerisierung von 1,6-Hexamethylendiisocyanat erhaltenen, Uretdiongruppen enthaltenden Polyisocyanats (%NCO = 21,4) werden bei 90° C mit 81,3 Teilen n-Octanol umgesetzt, bis der %NCO-Wert konstant ist (ber. 13,9 %). Das erhaltene Produkt ist bei Raumtemperatur flüssig und bequem portionsweise dosierbar.
b) Herstellung des Pulvers
   58,4 Teile Polyester II und 8 Teile pigmentierter Polyester II werden auf 100° C erhitzt, gemischt und unter Vakuum entwässert und entgast. Es werden 0,2 Teile Stabaxol und 0,5 Teile BHT zugesetzt. Das Gemisch wird bei 80° C mit 18,4 Teilen 1,6-Hexamethylendiisocyanat umgesetzt, bis der NCO-Wert konstant ist (berechnet 8 % NCO). Dann werden 6,2 Teile der unter a) beschriebenen Vernetzerkomponente zugesetzt. Schließlich werden unter Rühren der Präpolymer-Schmelze 1,5 Teile Treibmittel zugesetzt und ca. 10 Minuten weitergerührt.

Eine Lösung von 5 Teilen Antaron und 2 Teilen Dibutylzinndilaurat in 233 Teilen Isooctan wird auf 90° C erwärmt. Über eine Zeitspanne von ca. 10 Minuten wird das Polyester-HDI-Prepolymer (93,2 Gew.-Teile) unter starkem Rühren eingetragen. Dabei wird mit einem Doppel-Propeller-Rührer bei 1.100 Upm gerührt. Nach 30 Minuten werden 8,3 Teile 1,4-Butandiol zugesetzt. Die Dispersion wird für etwa 2 Stunden bei 90° C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Stunden im Vakuum bei Raumtemperatur getrocknet. Das erhaltene freifließende, graue Pulver enthält das Treibmittel in den Pulverteilchen und schmilzt oberhalb von 160° C. Mehr als 99 Gew.-% der Partikel weisen eine Korngröße von weniger als 315 µm auf.

Zur Herstellung eines geschäumten Flächengebildes wird eine ausreichende Menge der treibmittelhaltigen Polyurethan-Pulverzubereitung (Schichtdicke ca. 3 mm) auf eine Metallplatte aufgerakelt, der nicht angesinterte Überschuß der Mischung entfernt und diese für 10 Minuten bei 200° C im Ofen getempert. Dabei schmilzt das Pulvergemisch zunächst auf und beginnt dann unter Zersetzung des Treibmittels aufzuschäumen. Nach Abkühlen und Entformen erhält man eine weiche, elastische geschäumte Platte, die eine Dicke von 8 mm und eine Dichte von 0,2 g/cm³ aufweist.

### Beispiel 4: Hinterschäumte PU-Folie

Eine hinterschäumte Polyurethan-Folie, z.B. für Automobilinnenteile, wird erzeugt, indem zunächst für die Herstellung der kompakten Deckschicht eine PolyurethanPulverzubereitung verwendet wird, die wie in Beispiel 3 beschrieben, aber ohne Treibmittelzusatz hergestellt wird. Ein metallisches Formteil wird auf ca. 200° C vorgeheizt. Das Pulver ohne Treibmittelzusatz wird durch Kontakt mit der Formteiloberflche und nachtempern für 5 Minuten bei 200° C zu einer kompakten Schicht geliert. Auf die dem Formteil abgewandte Seite dieser noch im Formteil befindlichen Schicht wird die erfindungsgemäße treibmittelhaltige Polyurethan-Pulverzubereitung gemäß Beispiel 3 aufgebracht, angeliert, der nicht geschmolzene Überschuß durch Drehen der Form abgetrennt und die Form nochmals für 10 Minuten bei 200° C nachgetempert. Nach Abkühlen der Form kann das geschäumte Formteil mit kompakter Oberfläche entformt werden.

### Beispiel 5: Geschäumtes Formteil mit verdichteter Oberfläche

Ein vollständig aufgeschäumtes Formteil mit verdichteter Oberfläche, z.B. eine Schuhsohle, kann in einer entsprechenden Form, bestehend z.B. aus einem abnehmbaren Ober- und Unterteil hergestellt werden. Ober- und Unterteil werden getrennt auf ca. 200° C temperiert. Die erfindungsgemäße treibmittelhaltige Polyurethan-Pulverzubereitung gemäß Beispiel 3 wird in das Unterteil in einer Menge eingefüllt, die sich aus der gewünschten mittleren Schaumdichte und dem auszuschäumenden Volumen ergibt, z.B. für 240 cm³ Volumen und eine gewünschte Dichte von 0,3 g/cm³ ca. 70 g Pulvermischung. Die Form wird durch Aufsetzen des Oberteils verschlossen und bei 200° C für ca. 15 Minuten nachgetempert. Nach dem Abkühlen kann die fertige, geschäumte Schuhsohle, die eine verdichtete Oberfläche aufweist, entnommen werden.

## Patentansprüche

1. Verfahren zur Herstellung einer treibmittelhaltigen, expandierbaren Polyurethan-Pulverzubereitung durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen aufweist, in einer inerten organischen, flüssigen Trägerphase, ind er die Komponenten IA und IB sowie das als Umsetzungsprodukt erhaltene Polyurethan-Pulver unlöslich oder mit ihr nicht mischbar sind, wobei sich kugelförmige Partikel des Pulvers bilden, die vor Agglomeration durch die oberflächenaktive Verbindung geschützt sind, und
c) Abtrennung des Pulvers von der inerten organischen Trägerphase, dadurch gekennzeichnet, daß der inerten organischen Trägerphase vor oder nach der Umsetzung ein in der Trägerphase unlösliches, bei Raumtemperatur (25° C) festes pulverförmiges Treibmittel zugegeben wird.

2. Verfahren nach Anspruch 1, dadurch gekennzeichnet, daß das Treibmittel vor der Umsetzung mindestens einem der zu emulgierenden Polyurethanrohstoffe zugegeben wird.

3. Verfahren nach einem der Ansprüche 1 oder 2, dadurch gekennzeichnet, daß die Umsetzung in Gegenwart einer separat hergestellten Komponente III, die anteilig blockierte NCO-Gruppen aufweist, erfolgt.

4. Verfahren nach einem der Ansprüche 1 bis 3, dadurch gekennzeichnet, daß die Komponente III mit anteilig blockierten NCO-Gruppen
a) ein Umsetzungsprodukt aus dem Isocyanurat des 1,6-Hexamethylendiisocyanats, einem Hydroxybenzoesäureester sowie einem Polyol der mittleren Molmasse 400-6000,
oder
b) ein Uretdiongruppen enthaltendes, vorzugsweise durch Dimerisierung von Hexamethylendiisocyanat erhaltenes Polyisocyanat oder ein Umsetzungsprodukt aus diesem Uretdiongruppen enthaltenden Polyisocyanat mit einer oder mehreren NCO-reaktiven Verbindungen
oder
c) ein Gemisch von a) und b)
darstellt.

5. Verfahren nach einem der Ansprüche 1 bis 4, dadurch gekennzeichnet, daS bis zu 20 Gewichtsteile mindestens eines zumindest bei Raumtemperatur (25° C) festen, pulverförmigen Treibmittels bezogen auf den Gesamtfeststoffgehalt der Suspension eingesetzt wird.

6. Verfahren nach einem der Ansprüche 1 bis 5, dadurch gekennzeichnet, daß als Treibmittel pulverförmiges Azodicarbonamid eingesetzt wird.

7. Verfahren nach einem der Ansprüche 1 bis 6, dadurch gekennzeichnet, daß die für die PU-Pulverherstellung verwendete Komponente IA ein Urethan-NCO-Prepolymer darstellt, welches erhalten wird durch Umsetzung eines Diisocyanats mit einem Diol mit der mittleren Molmasse 400 bis 6000, und daß die verwendete Komponente IIA eine Mischung eines oder mehrerer Diole mit Molmassen von weniger als 400 darstellt.

8. Verwendung der expandierbaren, treibmittelhaltigen Polyurethan-Pulverzubereitungen gemäß einem der Ansprüche 1 bis 7 zur Herstellung geschäumter Polyurethan-Formkörper durch Erhitzen oberhalb der Zersetzungstemperatur des Treibmittels unter Aufschmelzen der Pulverzubereitung.

## Claims

1. Process for the production of an expandable polyurethane powder preparation containing a blowing agent by
a) production of an emulsion of fine droplets of a component IA possessing free NCO groups or of a component IB possessing groups reactive towards NCO groups, which emulsion is stabilised by a surface-active compound,
b) reaction of the emulsion of component IA with a component IIA possessing on average two hydrogen atoms reactive towards NCO groups or of the emulsion of component IB with a component IIB possessing on average two NCO groups, in an inert organic, liquid carrier phase, in which components IA and IB and the polyurethane powder obtained as reaction product are insoluble or with which they are immiscible, resulting in the formation of spherical particles of the powder, which are protected by the surface-active compound from agglomeration, and
c) separation of the powder from the inert organic carrier phase, characterised in that a pulverulent blowing agent solid at room temperature (25°C) and insoluble in the carrier phase is added to the inert organic carrier phase, prior to or after the reaction.

2. Process according to claim 1, characterised in that the blowing agent is added prior to the reaction to at least one of the polyurethane raw materials to be emulsified.

3. Process according to one of claims 1 or 2, characterised in that the reaction is carried out in the presence of a separately prepared component III possessing proportionally blocked NCO groups.

4. Process according to one of claims 1 to 3, characterised in that component III possessing proportionally blocked NCO groups is
a) a reaction product of the isocyanurate of 1,6-hexamethylene diisocyanate, a hydroxybenzoate ester and a polyol having an average molar mass of 400 to 6000,
or
b) a polyisocyanate containing uretdione groups which is obtained preferably by dimerisation of hexamethylene diisocyanate or a reaction product of this polyisocyanate containing uretdione groups with one or more NCO-reactive compounds
or
c) a mixture of a) and b).

5. Process according to one of claims 1 to 4, characterised in that up to 20 parts by weight of at least one pulverulent blowing agent solid at least at room temperature (25°C), referred to the total solids content of the suspension, are used.

6. Process according to one of claims 1 to 5, characterised in that pulverulent azodicarbonamide is used as blowing agent.

7. Process according to one of claims 1 to 6, characterised in that component IA used for the production of the PU powder is a urethane-NCO prepolymer obtained by reaction of a diisocyanate with a diol having an average molar mass of 400 to 6000, and in that component IIA used is a mixture of one or more diols having molar masses of less than 400.

8. Use of the expandable polyurethane powder preparations containing a blowing agent according to one of claims 1 to 7 for the production of foamed polyurethane mouldings by heating above the decomposition temperature of the blowing agent, with melting of the powder preparation.

## Revendications

1. Procédé de préparation d'une composition pulvérulente de polyuréthane contenant un agent porogène et expansible par
a) préparation d'une émulsion, stabilisée par un agent tensioactif, de fines gouttelettes d'un composant IA à groupes NCO libres ou d'un composant IB à groupes réactifs avec les groupes NCO,
b) réaction de l'émulsion du composant IA avec un composant IIA contenant en moyenne deux atomes d'hydrogène réactifs avec les groupes NCO, ou de l'émulsion du composant IB avec un composant IIB contenant en moyenne deux groupes NCO, dans une phase véhicule liquide organique inerte dans laquelle les composants IA et IB, de même que la poudre de polyuréthane obtenue en produit de réaction, sont insolubles ou non miscibles, avec formation de particules sphériques de poudre qui sont protégées contre une agglomération par l'agent tensioactif, et
c) séparation de la poudre et de phase véhicule organique inerte, caractérisé en ce que, avant ou après la réaction, on ajoute à la phase véhicule organique inerte un agent porogène solide à température ambiante (25°C), en poudre, insoluble dans la phase véhicule.

2. Procédé selon la revendication 1, caractérisé en ce que l'on ajoute l'agent porogène avant la réaction à au moins un des composants de polyuréthane à émulsionner.

3. Procédé selon une des revendications 1 ou 2, caractérisé en ce que la réaction est effectuée en présence d'un composant III préparé séparément qui contient des groupes NCO bloqués en partie.

4. Procédé selon une des revendications 1 à 3, caractérisé en ce que le composant III à groupes NCO partiellement bloqués
a) est un produit de réaction de l'isocyanurate du 1,6-hexaméthylènediisocyanate, d'un ester hydroxybenzoïque et d'un polyol de masse moléculaire 400 à 6 000,
ou bien
b) un polyisocyanate contenant des groupes uretdione, obtenu de préférence par dimérisation de l'hexaméthylènediisocyanate, ou un produit de réaction de ce polyisocyanate contenant des groupes uretdione avec un ou plusieurs composés réactifs avec les groupes NCO,
ou bien
c) un mélange a) et b).

5. Procédé selon une des revendications 1 à 4, caractérisé en ce que l'on utilise jusqu'à 20 parties en poids d'au moins un agent porogène solide au moins à température ambiante (25°C), en poudre, par rapport aux matières solides totales de la suspension.

6. Procédé selon une des revendications 1 à 5, caractérisé en ce que l'on utilise en tant qu'agent porogène de l'azodicarboxamide en poudre.

7. Procédé selon une des revendications 1 à 6, caractérisé en ce que le composant IA utilisé pour la préparation de la poudre de polyuréthane est un prépolymère d'uréthane à groupes NCO obtenu par réaction d'un diisocyanate avec un diol de poids moléculaire 400 à 6 000, et en ce que le composant IIA est un mélange d'un ou plusieurs diols de poids moléculaire inférieur à 400.

8. Utilisation des compositions pulvérulentes expansibles de polyuréthanes contenant un agent porogène selon une des revendications 1 à 7 pour la fabrication d'objets moulés en mousses de polyuréthanes par chauffage au-dessus de la température de décomposition de l'agent porogène avec fusion de la composition pulvérulente.
